**Europäisches Patentamt**

**European Patent Office**

**Office européen des brevets**

(19)

(11) Publication number: **0 132 467**
**A1**

(12) # EUROPEAN PATENT APPLICATION

(21) Application number: **83304376.3**

(22) Date of filing: **28.07.83**

(51) Int. Cl.⁴: **B 60 L 11/16**
**G 05 D 1/02**

(43) Date of publication of application:
**13.02.85 Bulletin 85/7**

(84) Designated Contracting States:
**AT BE CH DE FR IT LI LU NL SE**

(71) Applicant: **Bukatarevic, Dragan**
**22 Cheniston Gardens**
**London, W.8(GB)**

(72) Inventor: **Bukatarevic, Dragan**
**22 Cheniston Gardens**
**London, W.8(GB)**

(74) Representative: **Gold, Tibor Zoltán et al,**
**T.Z.GOLD & COMPANY 9, Staple Inn**
**London WC1V 7QH(GB)**

(54) A control system for an electrically driven vehicle.

(57) A control system for electrically driven vehicles in which energy generated both by the vehicle's (internal combustion) engine and electro-magnetically during braking is achieved by means of a first motor/generator (1) which converts the mechanical energy from the engine into electrical energy driving a second motor/generator (2) which acts as a traction motor, during the acceleration of the vehicle. During deceleration or braking of the vehicle, the second motor/generator (2) behaves as a generator converting the kinetic energy of the vehicle into electrical energy which in turn drives the first motor/generator (1) to rotate a flywheel accumulator (18). During subsequent acceleration, energy generated by the first motor/generator (1) as a result of the flywheel's rotation is used to drive the second motor/generator (2) in traction motor mode.

The system also includes a receiver (19) for receiving and processing traffic signal and related information which is applied to control or limit the operator-control of the vehicle in accordance with that information and a transmitter (20) for retransmitting relevant received information to other road traffic as well as information regarding the speed of the controlled vehicle's movement so as to maintain a constant link between, for example, successive cars in a stream of traffic.

./...

Croydon Printing Company Ltd.

FIG.1

## A control system for an electrically
## driven vehicle

This invention relates to an electromagnetic control system of the kind    which, in accordance with changes in the magnetic field in the energising windings of electric generators or motors and with the help of electronic circuits, controls automatically both the energy generated by a vehicle's engine and the energy generated by the vehicle's brakes, with the deceleration of the vehicle being achieved or assisted by the absorption of the kinetic energy generated by the vehicle's body which is accumulated as a result of an increase in the rotation of a generator coupled to a flywheel and is subsequently used as an additional source of energy when the motor vehicle accelerates again or continues its movement.

This invention also relates to a system of automatic registration and movement control of motor vehicles on the basis of various information-carrying signals emitted by suitably fitted emitting units or traffic signals, which typically transmits either infra-red rays or ultrasound waves carrying information related to the relevant traffic signal or any other traffic or other information of a general character .

This invention can be used to provide an improved and supplemented version of the invention entitled 'A control system for an electrically driven vehicle' the subject of my co-pending U.K. Published Patent Application No. 2071936 (8107600) and the corresponding U.S. Patent
No. 4,346,303.

It is known that the fuel consumption of motor
vehicles is greatly increased when operating in town
traffic, on a winding road or on a road with frequent
changes in the road's gradient. Under these conditions
the vehicles are frequently subjected to braking which
results in the kinetic energy of the vehicle to be wasted
irretrievably as heat either generated by the vehicle's
braking system or by the braking effect of the vehicle's
engine.

It is also known that the traffic conditions
today, which show a trend of a steady increase in the
number of vehicles on the roads, demand a greater degree
of traffic control based on automatic registration of
traffic conditions automatic reactions to these conditions
and improved information of those involved, all this
with the purpose of reducing or preventing individual
mistakes by road users, securing a continuous flow of
traffic, preventing anti-social or criminal activities
by road users and increasing the degree of safety in the
society as a whole.

According to a first aspect of the present
invention, in a control system for an electrically
driven vehicle, the energy involved in the movement of
the vehicle, including both the energy required for
acceleration and maintenance of steady movement of the
vehicle and the energy generated by the braking of the
vehicle, is controlled by first and second generators,
the first generator being simultaneously a traction generator propelled by the mechanical energy generated by the vehicle's engine and an energy-absorbing motor energised to rotate a flywheel accumulator by the electrical energy generated by the second generator during the deceleration phase of the vehicle during which the first generator shaft is uncoupled from the engine shaft; also if sufficient energy has accumulated in the rotation of the first generator and said flywheel the control is exercised by circuit means responsive to data derived from the measurements of potentials present at electrical junctions of the system representing the speeds of rotation of the first and second operators and the vehicle engine, and the potential present at a junction of the system controlling the acceleration/ braking of the vehicle which potential depends primarily on individual commands given by the driver of the vehicle and secondly on signals transmitted to the vehicle.

According to a second aspect the present invention provides an electronic circuit which includes a receiving element, comprising preferably a diode responsive to infrared radiation or a microphone responsive to ultrasound, which is fitted in use to the front end of a vehicle for receiving and feeding traffic information in the form of coded pulses to a decoding circuit which decodes the signal and converts it to an analogue signal which is then applied in use to a control system in accordance with the above first aspect of the invention, which in turn takes action automatically regarding the speed of the vehicle and the duration of the action, and also supplying other roadusers various information visually with the help of a screen display or otherwise by means of video or audio signals.

Preferably the circuit also includes a transmitting unit incorporating a diode or some other element for transmitting infrared rays or a loudspeaker for transmitting ultrasound waves fitted in use to the rear part of the vehicle, whose function is to transmit information received from a traffic signal and information on its own speed to the vehicles behind establishing thereby a constant link between the roadusers in traffic.

According to the invention in a third aspect, a control system for an electrically driven vehicle comprises a prime mover for driving first generator means, electric traction motor means for converting electrical energy generated by the first generator means into mechanical energy propelling the vehicle, second generator means operative during deceleration of the vehicle to convert kinetic energy of the vehicle into electrical energy, a second motor means for converting electrical energy generated by the second generator means during said deceleration into mechanical energy stored in mechanical energy accumulator means, and third generator means operative during subsequent acceleration of the vehicle to convert mechanical energy stored in the mechanical energy accumulator means into electrical energy for driving the electric traction motor means, wherein the system includes a receiver for receiving signals transmitted to the vehicle and speed control means responsive both to signals controlled by the operator of the vehicle as well as to signals received by the receiver for controlling the speed of the vehicle.

According to a fourth aspect of the present invention, a control system for an electrically driven vehicle comprises a prime mover for driving first generator means, electric traction motor means for converting electrical energy generated by the first generator means into mechanical energy propelling the vehicle, second generator means operative during deceleration of the vehicle to convert kinetic energy of the vehicle into electrical energy, second motor means for converting electrical energy generated by the second generator means during said deceleration into mechanical energy stored in mechanical energy accumulator means, and third generator means operative during subsequent acceleration of the vehicle to convert mechanical energy stored in the mechanical energy accumulator means into electrical energy for driving the electric traction motor means, wherein the first and third generator means and the second motor means are all provided by a common induction motor/generator. Preferably also the traction motor means and the second generator means are provided by a further common induction motor/generator.

According to a system in accordance with the present invention described in this specification the exchange of energy generated both by the vehicle's engine and by the braking system, is carried out with the help of two reversible generators-electric motors, i.e. with the help of a generator generating energy, which is at the same time an absorption electric motor, and a traction electric motor which is at the same time an absorption generator. During the vehicle's deceleration phase the vehicle's kinetic energy is absorbed with the help of both generators and accumulated in the shape of the kinetic energy contained in the increased rotation of the traction generator and its attached flywheel; this energy is subsequently used to propel the vehicle, as will be explained in more detail later on in the text.

Within this system of automatic exchange of energy generated by the movement of the vehicle an integrated unit has been added whose purpose is to receive and process traffic informations; the signals produced by this unit activate the system in accordance with the received traffic information, but at the same time it transmits both the information received and the information about the speed of the vehicle's movement to other road users establishing a kind of a constant link between them all.

The invention will now be described in more detail with reference to the accompanying drawings, in which:-

Figure 1 shows a circuit diagram of an embodiment of the invention;

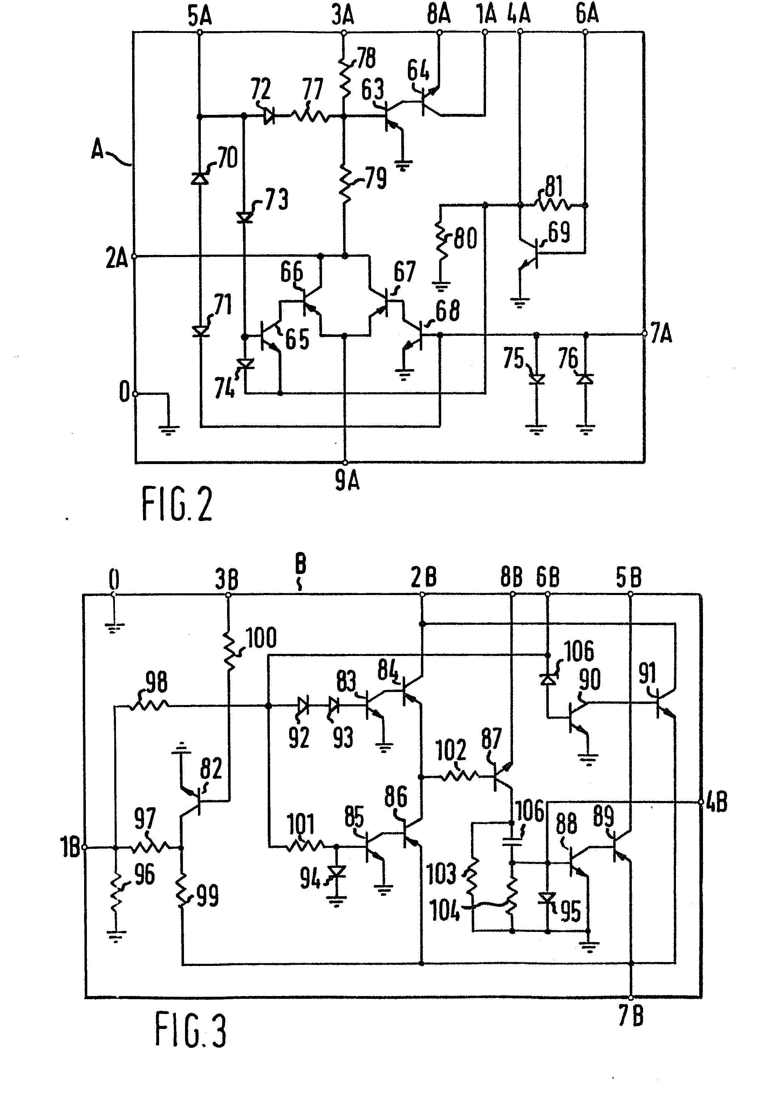

Figures 2 and 3 show the circuit diagram of respective integrated circuits incorporated in the system shown in Figure 1;

Figure 4 shows the circuit diagram of a further integrated circuit incorporated in the system shown in Figure 1;

Figure 5 shows the circuit diagram of a further integrated circuit incorporated in the system shown in Figure 1;

Figure 6 illustrates waveforms of some of the signals which appear during operation in the integrated circuit shown in Figure 4; and

Figure 7 illustrates graphically the electrical characteristics of a motor/generator incorporated in the system shown in Figure 1.

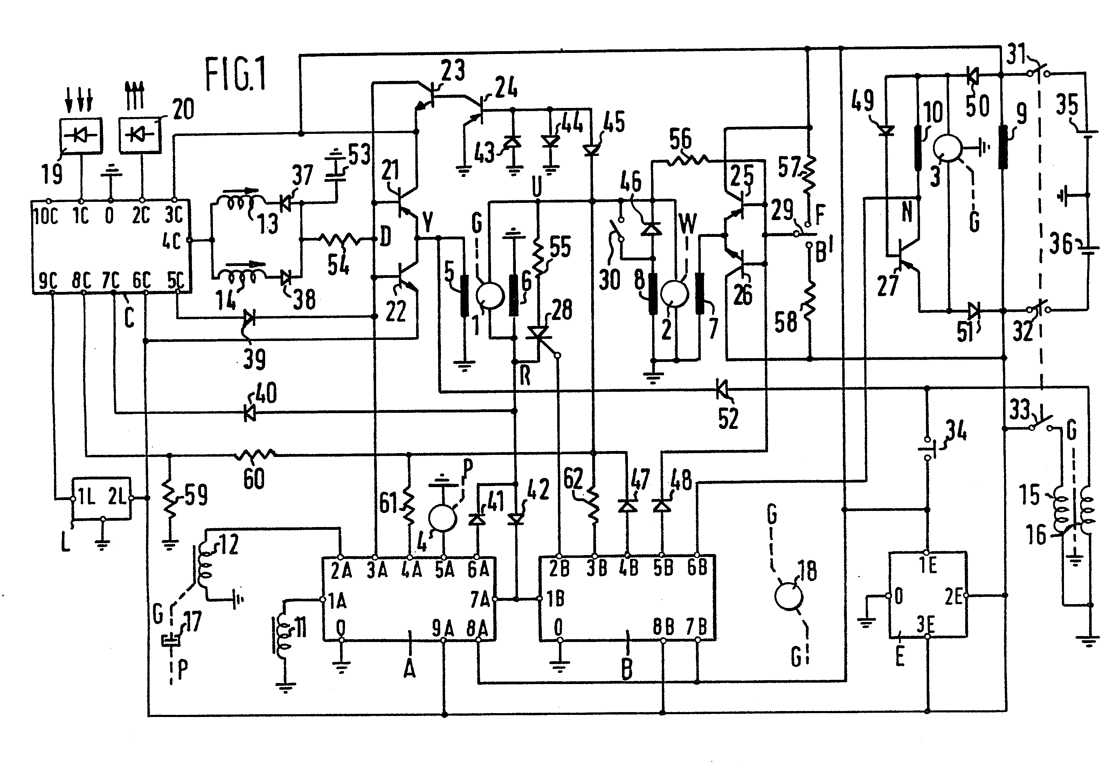

Individual parts of the electrical circuit of the control system as shown in Figure 1 are displayed in the shape of integrated circuits integrated into any number of integrated circuits whose functions are determined on the basis of different impulses giving information on the vehicle's movement, on the quantity of energy accumulated in a flywheel 18 and on the traffic conditions, and on the basis of different outgoing signals which control the engine's power output (via a solenoid 11), separate the vehicle engine's drive shaft P from the shaft of a generator 1 (via an electromagnetic clutch 17), provide additional loads (via a resistor 55 and thyristor 28) and limit the vehicle's maximum speed (according to the potential of the signal in a solenoid 13). The integrated circuit A controls the solenoid 11 and the electromagnetic clutch 17 and basically controls the system's power output. The integrated circuit B analyses the state of the energy accumulated in the flywheel 18. The integrated circuit C processes traffic information received via a receiver 19, acts and establishes links with other road users e.g. via a transmitter 20. The integrated circuit E provides the feed source and the integrated circuit L provides a display of information on the screen or in any other shape of visual or sound information.

The generator 1 is mounted on the shaft G, which is separated from the engine drive shaft P by the electromagnetic clutch 17, controlled by a solenoid 12, whenever the vehicle is in the deceleration phase or whenever the generator 1, or rather its associated flywheel 18, has enough energy accumulated in its rotation. The flywheel 18 and a generator 3 are also mounted on the same shaft G. A second generator 2 is mounted on a separate shaft W, which is linked to the vehicle's wheels via a differential mechanism. The energising winding 5 belongs to the generator 1 and is fed either from the negative terminal of battery 35 or the positive terminal of battery 36 depending on the potential of the bases of transistors 21 and 22 which control the feed to the winding. Switches 31, 32 and 33 are switched on and off with the vehicle's ignition key. The shaft G is also linked firmly, via an electromagnetic clutch controlled by two solenoids 15 and 16, to the vehicle's chassis, provided the vehicle is stationary and the switch 33 is open. When the switch 33 closes the shaft G of generator 1 is released and the engine can be started. A switch 34 enables the shaft G to be released without the use of the ignition key, in case of breakdown or something similar.

A sinusoidal or square-shaped signal emerging from a terminal 4c of the integrated circuit C is fed into each of a pair of solenoids 13 and 14, whose cores are made of ferromagnetic material and can be pushed into or retracted from the solenoids. The solenoid 13 is used for propelling the vehicle and the solenoid 14 for braking or vice versa depending on the cores' initial position. When the vehicle is stationary a capacitor 53 is not under load or is only partially under load from the positive potential and when the vehicle is moving the potential on the capacitor 53 is either negative or positive depending on the relative positions of the cores of the solenoids 13 and 14. The rectifying action of diodes 37 and 38 makes this potential negative when the vehicle is being propelled and positive when the brakes are applied. This potential feeds the bases of transistors 21 and 22 via a resistor 54 with the transistors controlling the energisation of winding 5. The direction of the magnetic field in the motor/generator 1 is determined in the following manner: when a negative potential feeds the energising winding 5 at the point Y a positive potential appears at the point U of the generator 1 feeding the electric motor/generator 2. A protective winding 6 is incorporated in the generator 1 and it consists of just a few windings and when the generator 1 feeds the generator 2 its function is to limit the current generated by the generator 1 enabling thus the absorption when the brakes are applied. A circuit consisting of diodes 43, 44, 45 and transistors 23 and 24 prevents a negative potential from appearing at the point U of the generator. Considering that the generator 1 and the electric motor 2 are reversible in the sense that the generator 1 can operate as an electric motor 1 and the electric motor 2 can operate as a generator 2 depending on the function they perform in the various phases of movement, in the descriptions which follow they will be simply called generator 1 and generator 2. An energising winding 7 belongs to the generator 2 and is fed from the negative potential source (battery 35) via a transistor 25 during forward movements and via a transistor 26 from the positive potential source (battery 36) during reverse movements. This is determined by the position of the switch 29, which feeds the negative potential to the bases of transistors 25 and 26 via a resistor 57 in the position B'. A protective winding 8, which is incorporated into the generator 2, gets its feed via a diode 46 and prevents the appearance of the negative potential on the generator if the position of the switch 29 is contrary to the movement of the vehicle, which can happen if the vehicle had come to a halt on an uphill gradient, or if there is a fault in the protective winding 7 or something similar. A switch 30 is synchronised with the vehicle handbrake and it can close only if the vehicle had come to a halt and if the switches 31, 32 and 33 are open. In this case the generator 2 is short-circuited via the protective winding 8. The maximum current, which is determined by the protective winding 8, determines the maximum braking power, or allows only slow sliding if the vehicle had been parked on an uphill gradient and the clutch linking the shaft G to the chassis is faulty and the handbrake not applied fully.

The generator 3 is constantly energised by a winding 9 and its voltage is stabilised over a wide range with the help of a winding 10, a transistor 27 and a diode 49. The generator 3 feeds the system and charges the batteries 35 and 36 via diodes 50 and 51. The potential on the collector of transistor 27, at the point N, increases with the number of revolutions of the shaft G, from the value of the negative potential of the battery 35 which is set to the minimum number of revolutions of the shaft, to the zero potential set to the maximum number of revolutions of the shaft G and the generator 1 respectively. Consequently the potential on the collector of transistor 27 registers the level of the energy accumulated in the system, i.e. in the rotation of the flywheel 18.

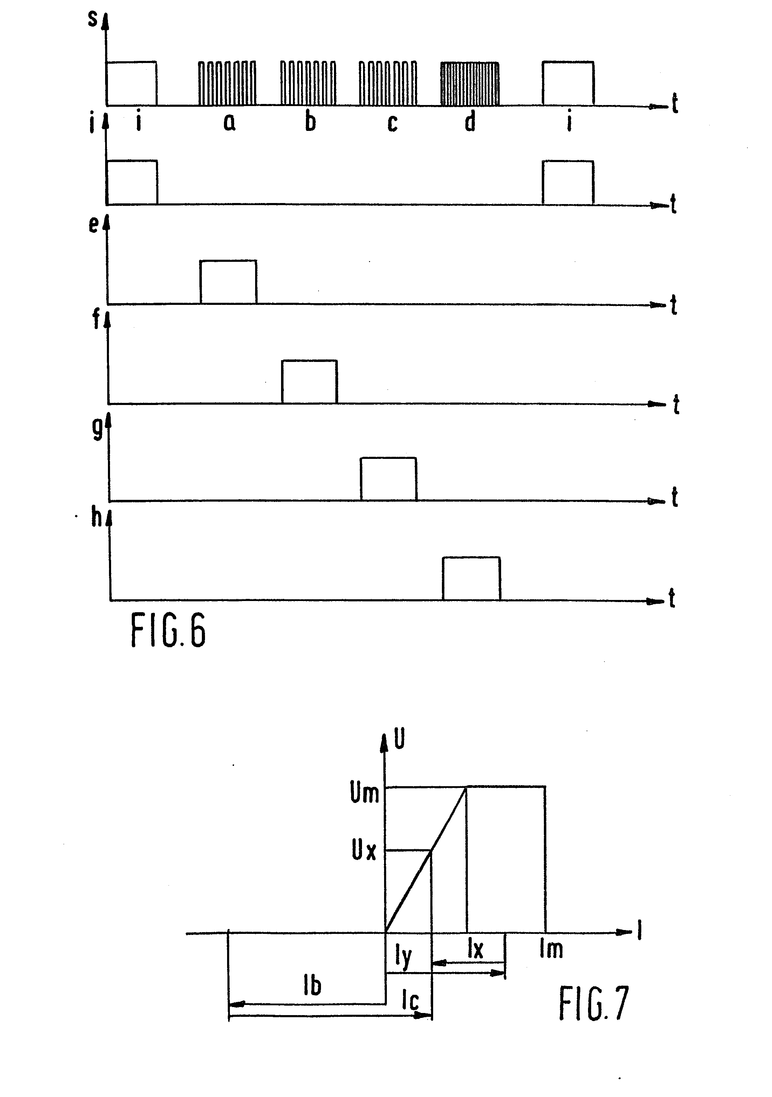

Figure 7 illustrates the reactions of the protective winding 6 on the generator 1. The abscissa represents the current in the protective winding 6 and the corresponding value of the energising current in the winding 5, i.e. the sum total of the currents in the winding. The ordinate represents the value of the voltage of generator 1. When the vehicle is moving the energising current Iy is flowing through the winding 5, but its action meets the opposing effects of the protective current Ix so that their interaction determines the generator's output EMF. When the brakes are applied the energising current Ib is flowing through the winding 5 and its action meets the opposing effects of the protective current Ic so that their interaction determines the output EMF of generators 1 and 2. The potential at junction R (Figure 1) depends on the strength of the current flowing through the generator 1 and this potential is negative during the acceleration or steady movement of the vehicle, and positive during braking and that is how the potential at junction R registers the generator's load and its working regime.

Thyristor 28 and the resistor 55 are wired in parallel to the generator 1. When the pre-determined maximum value of the accumulated energy has been reached, i.e. when the number of revolutions of the shaft G is at its maximum, the resistor 55 is switched on and off, with the help of the thyristor 28 and the integrated circuit B, to provide an additional load in parallel to the generator 1 without producing any changes to the braking power generated initially by the generator 2, which is achieved by the protective action of the winding 6.

The integrated circuits A and B, whose elements are marked with numbers from 63 to 106, are substantially as described in more detail in the above-mentioned copending Patent Application No. 2071936 to which reference is directed and they can functionally be integrated into one or any number of integrated circuits with varying configurations of their electronic elements or types of electronic circuits, but basically they perform the functions of automatic control and exchange of energy in the system; for that reason their functions are given in this description on the basis of the input and output data of the system.

The input data in the system are determined by:

- The potential at the junction D, which determines the type of movement on the basis of individual signals to the solenoids 13 and 14, i.e. signals which determine whether the vehicle will accelerate, move along steadily or decelerate.

- The potential at the junction U which registers the speed of the vehicle's movement and which, on the basis of the potential at the junction D, regulates the engine power output by acting on the solenoid 11.

- The potential at the junction R, which registers the type of movement and separates, with the help of the electromagnetic clutch 17, the shaft G of the generator 1 from the engine drive shaft P during the phase of either absorption or usage of the energy accumulated in the system and regulates the engine power output.

- The potential at the junction N which registers the number of revolutions of the generator 1, i.e. the level of energy accumulated in the flywheel 18, and which, by being compared to the potential at the junction U, either disengages or engages the shafts G and P, switches on or off the solenoid 11 and switches on or off the generator's additional load, the resistor 55.

- The potential, i.e. the EMF of a generator 4, which registers the number of the vehicle's engine revolutions.

The integrated circuit B registers at the terminal 3B via a resistor 62 the level of the potential at the junction U and the level of the potential at the junction N at the terminal 6B. Depending on the comparisons between these two potentials a positive potential will appear at the terminal 1B if the number of revolutions of the generator 1 is greater than that of the generator 2. This positive potential is fed to the terminal 7A of the integrated circuit A as an input signal which activates the blocking effect of the integrated circuit A, i.e. blocks the action of the solenoid 11, keeping the engine at its minimum number of revolutions and, with the help of the solenoid 12 which is incorporated into the electromagnetic clutch 17, the two shafts P and G separated. In the same manner the registration of the appearance of a positive potential at the junction N, the registration of the fact that the number of revolutions of the shaft G has reached its maximum, feeds an impulse to the terminal 2B, which switches on thyristor 28 and the resistor 55, and to the terminal 5B via the diode 48 an impulse which switches off thyristor 28 and the resistor 55. The diode 47, which is wired to the terminal 4B, limits the strength of that impulse. The integrated circuit B gets its feed via the terminals 7B and 8B.

The integrated circuit A registers at the terminal 7A via a diode 42 the level of the potential at the junction R and if the vehicle is in the braking phase this potential is positive switching off the solenoid 11 and switching on the solenoid 12 which separates the shafts G and P. The potential at the junction D is fed to the terminal 3A carrying the command on the movement of the vehicle and the potential of the generator 4 registering the number of engine revolutions is fed to the terminal 5A. By comparing these two potentials the circuit controls the solenoid 11, i.e. the engine power output, whereby the number of engine revolutions has the tendency to synchronize its levels to individual commands, i.e. to the potential at the junction D, with the potential at the junction U, which - as mentioned above - represents the speed of the vehicle's movement, exercising a limiting effect. The potential at the junction U is fed to the integrated circuit A via a resistor 61 to the terminal 4A. The negative potential which registers the load of generator 1 and controls the engine power output is fed to the terminal 6A via a diode 41. The integrated circuit A is fed via the terminals 8A and 9A.

The output data for both integrated circuits A and B are:

- The conditions prevailing at the terminal 1A for controlling the solenoid 11 which in turn controls the lever which regulates the engine power output.

- The conditions prevailing at the terminal 2A for controlling the solenoid 12 associated with the electromagnetic clutch 17, which separates the shafts G and P.

The individual commands in the system are:

- The command coming from the solenoid 13, which regulates the speed of the vehicle's movement, i.e. the shifting of the solenoid core feeds a negative potential to the junction D whose action either accelerates the vehicle or keeps its speed at a uniform level.

- The command coming from the solenoid 14, which regulates the braking of the vehicle, i.e. the shifting of the solenoid core feeds a positive potential to the junction D whose action causes the vehicle to decelerate by having absorbed the vehicle's kinetic energy which might be needed for emergency braking.

The braking lever which regulates the shifting of the core of the solenoid 14 is part of the hydraulic braking lever and it is the core of the solenoid 14 which reacts first to the movement of that lever with the hydraulic braking mechanism coming into action when more intensive pressure is applied on the lever. The slowing down of the vehicle under normal driving conditions is achieved by the reduction of the absolute value of the negative potential at the junction D which acts on the solenoid 13.

The braking effect of the kinetic energy absorbed in the system shows as follows:

When the absolute value of the negative potential at the junction D falls off during the movement of the vehicle, or when this potential turns positive, the energising current in the winding 5 has the tendency to create at the junction U of the generator 1 a reduced or negative EMF value. Since, owing to the vehicle's intertia, the generator 2 maintains this potential, there is a current flowing through the generator 1, which, by its action in the protective winding 6, evens out the EMF of both generators with the generator 1 acting as electric motor, i.e. as consumer. At the same time a positive potential appears at the junction R, which separates the generator 1 shaft from the engine shaft with the help of the integrated circuit A. As a result of this the number of revolutions of generator 1 rises continuously until the vehicle comes to a halt or until the decelerating of the vehicle ceases or until it reaches a pre-determined maximum number of the generator 1 shaft revolutions, which are then automatically limited by the action of the integrated circuit B, which switches on and off the resistor 55 without altering the value of the generator 2 braking current. If the vehicle came to a halt and the potential at the junction U fell to zero, while the potential at the junction D - derived from the action of the solenoid 14 - retained the tendency to induce a negative potential at the junction U, then the diode 45 and transistors 23 and 24 keep this potential at a negligibly low negative value, which is not sufficient to induce any significant changes in the generator 2.

If a fault develops in this circuit and the generator 1 retains its tendency to create a negative potential at the junction U, then the diode 46 becomes conductive and limits, together with the protective windings 6 and 8, the negative potential from building up to any significant value.

If, following the deceleration or stopping of the vehicle, an individual command is given to the solenoid 14 establishing a negative potential at the junction D, the generator 1 has the tendency to create a positive potential feeding the generator 2 and causing the vehicle on the move again. During this process the number of revolutions of the generator 1 is steadily falling off until a balance is established between the number of revolutions of generator 1 and generator 2, which is then registered by the integrated circuit B; this circuit is then acting via the integrated circuit A to engage, with the help of the clutch 17, the generator shaft G and the engine drive shaft P, which then takes over the task of supplying the system with energy required for maintaining the movement of the vehicle, while the integrated circuit A takes over the task of regulating the power output.

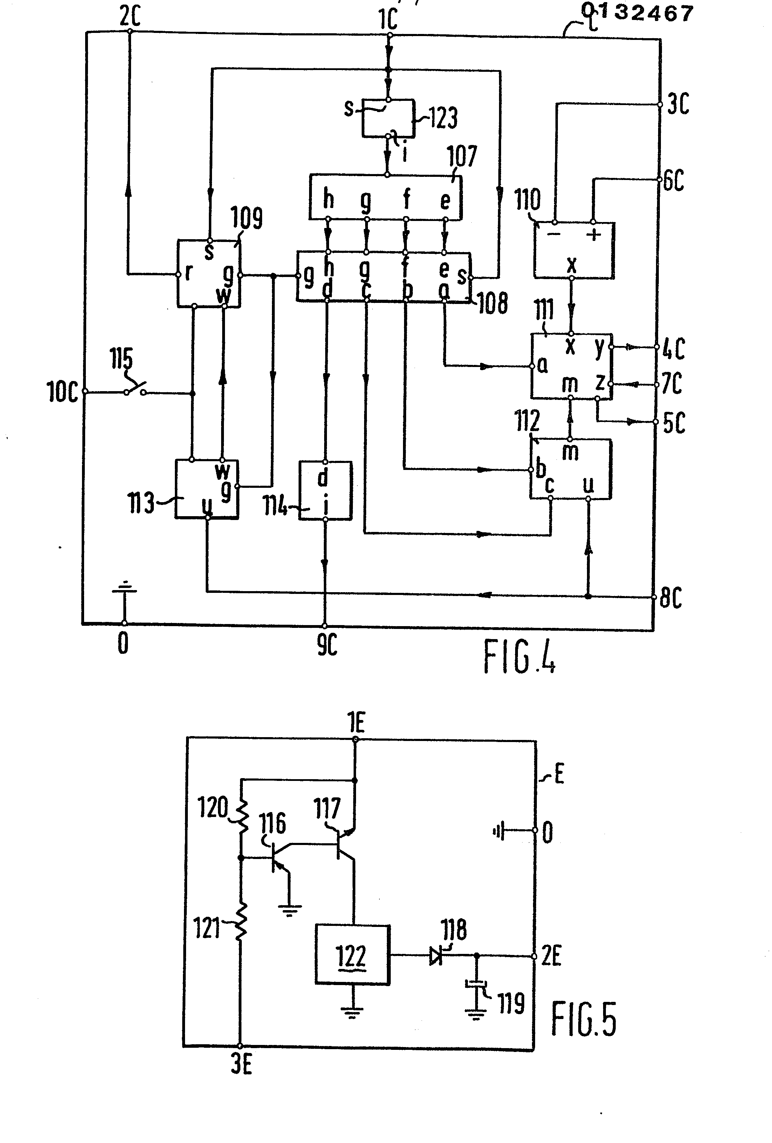

If a fault develops in the system during the drive and the positive feed is discontinued while the vehicle is in the braking phase, the solenoid 15 gets no feed and this makes in turn the associated clutch engage gradually, with the help of a hydraulic or some other system, linking the shaft G to the vehicle's chassis and slowing the vehicle down gradually. If the vehicle is not in the braking phase, but in the phase of steady movement, a diode 52 feeds the solenoid 16 preventing the clutch from engaging. At the same time the source of the positive feed 36 is replaced by the integrated circuit E, but with a slightly lower positive potential than normal. Referring to Figure 5, the base of transistor 116 is fed via the potential divider incorporating resistors 120 and 121 and this transistor is non-conductive if a normal value of the positive potential is present at the junction 3E.  If the potential at the junction 3E is reduced by a predetermined amount transistors 116 and 117 become conductive and transmit a negative potential which feeds an oscillator 122  A diode 118 and a capacitor 119 create a positive potential at the junction 2E, which continues to feed the system. This potential is slightly lower than the potential of the battery 36 and this maintains the conductivity of transistors 116 and 117.

Referring to Figure 4, the oscillator 110, incorporated in the integrated circuit C, is fed from both sources 35, 36.  It gets its negative feed at the junction 3C and its positive feed at the junction 6C. If the oscillator develops a fault during the drive, which means that no signal is produced at the oscillator's output (x), a positive potential appears at 5C feeding the base of transistor 22 via a diode 39 and this in turn transmits a signal to the generator 1 and slows down the vehicle.  The oscillator's output signal (x) is transmitted to a limiter of the oscillator 111, whose output signal (y) feeds, via the junction 4C, the solenoids 13 and 14.  The limiter of the signal transmitted by the oscillator 111 can be a limiter of any type and if, for instance, the oscillator's signal is square shaped, the limiter can consist of a transistor whose base is fed with the oscillator's positive impulses via one resistor and via another resistor gets a variable negative potential which depends on the input signals appearing at junctions (a) and (m), which will be described below.

The receiver or sensor 19, which is either a diode or some other element whose conductivity varies with the infra-red rays falling upon it or a microphone if ultra-sound waves are involved, registers signals transmitted e.g. by a traffic sign. This signal is represented in Figure 6(s). In principle it consists of synchronising impulses (i) and coded signals, i.e. of a series of impulses (a), (b), (c) and (d) laid out in fixed positions between the synchronising impulses.

The first series of impulses (a) contains information on speed limits, which is determined by the number of impulses, with a single impulse in the series limiting the maximum speed on the motorway, and the maximum number of impulses representing a stop signal or a signal given by the traffic police.

The second series of impulses (b) contains information on the duration of the restriction imposed, which again is determined by the number of impulses, with one impulse representing, say, a period of 20 seconds and the maximum number of impulses a continuous restriction until the vehicle has come to a halt.

The third series of impulses (c) contains information on the source of the traffic information; it depends on the number of impulses, with nil impulses representing an actual traffic sign and the various fixed numbers of impulses in this series representing the speed of a vehicle, i.e. the next vehicle ahead in the link established by the transmitting element 20 fitted to the rear of that vehicle.

The fourth series of impulses (d) typically contains randomly selected traffic and general information such as information on the weather, public places in the city etc.

The signal registered by the sensor 19 is fed via the terminal 1C simultaneously to a device 123 for sorting the synchronising impulses, to a device 108 for sorting or decoding the series, and to the inputs (s) of a link establishing device 109. The synchronising impulses coming from the device 123 via the link (i) energise a generator of locating impulses 107, which feeds the variously positioned impulses via the outputs (e), (f), (g) and (h) to device 108 for the sorting of series using the corresponding links as represented in Figure 6 in the shape of the variously positioned impulses (e), (f), (g) and (h) in relation to the synchronising impulses (i). The output (a) containing only a series of impulses (a) is fed via the corresponding link to the device for level limiting 111, and the output (b) containing only the series of impulses (b) is fed via the corresponding link to the memory 112. The series of impulses (c) is fed to the same device and so is, via the input (u), the potential from the potential divider represented by resistors 59 and 60 which potential is proportional to the vehicle's speed.

The memory 112 consists of an impulse counter, which is fed by a series of impulses coming from an impulse detector. Every single output signal of the counter energises one or more monostable circuits with varying time constants and the last impulse in the series (b) energises a bi-stable circuit. By comparing the potentials at the inputs (c) - the speed of the vehicle in front - and (u) - the speed of the controlled vehicle - a new potential appears at the output (m), which enables the series (a) impulse counter feed within the device 111, but only if the vehicle's speed is greater than the speed of the vehicle in front.

The potential at the input 8C is simultaneously fed into a coder 113, which transforms the value of this potential, within the framework of the impulses (g), into a series of impulses describing the vehicle's speed. The series of impulses (w) is directed from the coder's output to the output device of the link 109, where it replaces the preceding information which was blocked off beforehand by the positional impulses (g). The complete signal is then directed from the output (r) of the link 109 via the terminal 2C to the transmitting element 20, which can be either a diode or some other element emitting infra-red rays or a loudspeaker emitting ultra-sound waves. The receiving element 19 is positioned to receive the signals coming to the front of the vehicle, and the transmitting element 20 is positioned to transmit signals to the vehicles behind establishing thereby a link between all the vehicles in the traffic for the purpose of transmitting any traffic signs.

The series of impulses (d) is then directed to the decoder 114, which produces at its output an analogue signal representing random or general traffic information, and which is then directed via the terminal 9C to the integrated circuit D to produce either visual signals on a screen or (and) sound signals to all the roadusers in a certain traffic situation based on the information which has been registered.

Under the conditions of limited visibility, for instance round bends, or if the vehicle has come to a halt (caused by a breakdown or something similar) creating a hazard to other roadusers a switch 155 is switched on, which establishes, via the junction 10C, a constant feed from the battery 35 and links up with coder 113 which sends a synchronising impulse and a stop signal to the output terminal of device 109 acting thereby as a fixed traffic sign.

When the brakes are applied a positive potential is directed via the diode 40 and junction 7C to the signal limiter and this potential overrides the limiting effect of the limiter 111 maintaining the signal at the junction 4C at its maximum level in case emergency braking is required.

The integrated circuit C can in accordance with the invention be fitted to any type of motor vehicle and the signals appearing at the output terminal 4C can be directed to an integrated circuit L and presented as a visual or audio information describing the traffic signs.

CLAIMS

1.    A control system for an electrically driven vehicle, comprising a prime mover for driving first generator means (1), electric traction motor means (2) for converting electrical energy generated by the first generator means (1) into mechanical energy propelling the vehicle, second generator means (2) operative during deceleration of the vehicle to convert kinetic energy of the vehicle into electrical energy, second motor means (1) for converting electrical energy generated by the second generator means (2) during said deceleration into mechanical energy stored in mechanical energy accumulator means (18), and third generator means (1) operative during subsequent acceleration of the vehicle to convert mechanical energy stored in the mechanical energy accumulator means (18) into electrical energy for driving the electric traction motor means, characterized in that the system includes a receiver (19) for receiving signals (S) transmitted to the vehicle and speed control means (C; 13,14) responsive both to manual control by the operator of the vehicle and to signals received by the receiver for controlling the speed of the vehicle.

2.    A control system as claimed in claim 1, characterized in that said manual control (13,14) is operable to control the direction of the energisation current of the field windings (5) of the first and third generator means (1) and the second motor means (1) whereby to control the acceleration and deceleration of the vehicle and the speed control means (C) is responsive to signals received by the receiver (19) to control or limit the magnitude of said energisation current.

3. A control system as claimed in claim 1 or claim 2, characterised in that the first and third generator means and the second motor means are all provided by a common induction motor/generator (1) energised by a common field winding (5) receiving said energisation current.

4. A control system as claimed in claim 3, characterised in that the traction motor means and the second generator means are provided by a further common induction motor/generator (2).

5. A control system as claimed in claims 2, 3 or 4, characterised in that the speed control means (C) includes an oscillator (110) the output (x) of which is controlled by signals received by the receiver (19) to control or limit the magnitude of the said energisation current.

6. A control system as claimed in Claim 5, characterised in that positive and negative half-wave portions of the output (x) of the said oscillator (110) are applied through respective variable inductances (14,13) to charge a capacitance (53) either positive or negative in dependence upon the relative values of said variable inductances (14,13) which are operator-controlled, the magnitude and direction of said energising current being dependent upon the magnitude and polarity of the voltage on the capacitance (53).

7. A control system as claimed in Claim 6, characterised in that the output (x) of the oscillator (110) is applied to the variable inductances (13,14) through a limiter (111) which is responsive to signals (a,b,c) received by the receiver (19) to selectively control the output of the oscillator (110) applied to said variable inductances (13,14).

8. A control system as claimed in any one of Claims 1 to 7, characterised in that the speed control means includes means (111) for rendering the speed control means non-responsive to signals received by the receiver (19) during deceleration of the vehicle.

9. A control system as claimed in any one of claims 1 to 8 responsive to information received by the receiver regarding the speed of other vehicles and to control the speed of the controlled vehicle in relation to the speed of those other vehicles.

10. A control system as claimed in any one of Claims 1 to 9 including a transmitter (20) for transmitting information regarding the speed of the controlled vehicle in a form suitable for reception by the receiver (19) of other vehicles incorporating similar control systems.

11. A control system as claimed in Claim 10, characterised in that the receiver (19) adapted to receive and identify road traffic information signals (a,b,c,d) and the transmitter (20) is adapted to re-transmit said information to other vehicles incorporating similar control systems.

12. A road vehicle incorporating a control system as claimed in Claim 11, characterised in that the transmitter (20) is fitted to the rear of the vehicle and the receiver (19) is fitted to the front of the vehicle.

13. A control system for an electrically driven vehicle, comprising a prime mover for driving first generator means (1), electric traction motor means (2) for converting electrical energy generated by the first generator means (1) into mechanical energy propelling the vehicle, second generator means (2) operative during deceleration of the vehicle to convert kinetic energy of the vehicle into electrical energy, second motor means (1) for converting electrical energy generated by the second generator means during said deceleration into mechanical energy stored in mechanical energy accumulator means (18), and third generator means (1) operative during subsequent acceleration of the vehicle to convert mechanical energy stored in the mechanical energy accumulator means (18) into electrical energy for driving the electric traction motor means (2) characterised in that the first and third generator means and the second motor means are all provided by a common induction motor/generator (1).

FIG.1

0132467

1/4

FIG.2

FIG.3

3/4

0132467

FIG.4

FIG.5

FIG.6

FIG.7

European Patent Office

**EUROPEAN SEARCH REPORT**

**0132467**
Application number

EP 83 30 4376

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| E | GB-A-2 114 387 (D.BUKATAREVIC) *The whole document* | 1-13 | B 60 L 11/16 G 05 D 1/02 |
| D,A | GB-A-2 071 936 (D.BUKATAREVIC) *The whole document* | 1-4,13 | |
| A | FR-A-2 374 679 (PEUGEOT) *Page 7, line 14 - page 10, line 15; figures 1-4* | 1,9,10 | |
| A | EP-A-0 052 263 (INVENTIO) *Page 8, line 20 - page 11, line 20; figures 1-4* | 1,9,10 ,12 | |
| A | ELECTRONICS, vol. 44, no. 24, 22nd November 1971, pages 89-90, New York (USA); A.ROSENBLATT: "Electronics in the driver's seat". *Figures; "Vehicle control"* | 1,11 | **TECHNICAL FIELDS SEARCHED (Int. Cl. ³)**<br><br>B 60 K<br>B 60 L<br>G 01 D |
| A | AUTOMOBILTECHNISCHE ZEITSCHRIFT, vol. 81, no. 6, 1979, pages 283-289, Stuttgart (DE); C.BADER: "Elektrische und hybride Antriebe für Nutzfahrzeuge". *Pages 288-289, paragraph "Hybridantrieb mit Schwungradkomponente"; figure 6* | 1,3,4, 13 | |

-/-

The present search report has been drawn up for all claims

| Place of search | Date of completion of the search | Examiner |
|---|---|---|
| THE HAGUE | 02-04-1984 | HOUILLON J.C.P.L. |

**0132467**
Application number

**EUROPEAN SEARCH REPORT**

European Patent Office

EP   83 30 4376

Page   2

## DOCUMENTS CONSIDERED TO BE RELEVANT

| Category | Citation of document with indication, where appropriate, of relevant passages | Relevant to claim | CLASSIFICATION OF THE APPLICATION (Int Cl. ³) |
|---|---|---|---|
| A | BE-A- 890 754  (A.F.G.RANSY)  *The whole document* | 1,3,4, 13 | |
| A | GB-A-2 074 963  (DAIMLER-BENZ)  *Abstract* | 1,3,4, 13 | |

TECHNICAL FIELDS SEARCHED (Int. Cl. ³)

The present search report has been drawn up for all claims

| Place of search | Date of completion of the search | Examiner |
|---|---|---|
| THE HAGUE | 02-04-1984 | HOUILLON J.C.P.L. |